# EUROPEAN PATENT SPECIFICATION

(11) **EP 0 959 428 B1**
(45) Date of publication and mention of the grant of the patent: **29.11.2006**
(21) Application number: 99303838.9
(22) Date of filing: 18.05.1999
(51) Int. Cl.: G06T 1/60

(54) **Image processing apparatus, special effect apparatus and image processing method**
Bildverarbeitungsverfahren und -vorrichtung, Vorrichtung für Trickeffekte
Procédé et appareil de traitement d'images, dispositif a effets speciaux

(30) Priority: 22.05.1998 JP 14115698
(43) Date of publication of application: 24.11.1999
(73) Proprietor: SONY CORPORATION, Tokyo 141 (JP)
(72) Inventor: Kurashige, Masafumi, Shinagawa-ku, Tokyo (JP)
(74) Representative: Robinson, Nigel Alexander Julian

(56) References cited:
- WO-A-97/39437
- US-A- 5 384 912
- KUMANOYA M ET AL: "TRENDS IN HIGH-SPEED DRAM ARCHITECTURES" IEICE TRANSACTIONS ON ELECTRONICS, INSTITUTE OF ELECTRONICS INFORMATION AND COMM. ENG. TOKYO, JP, vol. E79-C, no. 4, 1 April 1996 (1996-04-01), pages 472-481, XP000597417 ISSN: 0916-8524
- SUIZU K ET AL: "EMERGING MEMORY SOLUTIONS FOR GRAPHICS APPLICATIONS" IEICE TRANSACTIONS ON ELECTRONICS, INSTITUTE OF ELECTRONICS INFORMATION AND COMM. ENG. TOKYO, JP, vol. E78-C, no. 7, 1 July 1995 (1995-07-01), pages 773-781, XP000528806 ISSN: 0916-8524

## Description

The present invention relates to an image processing apparatus, a special effect apparatus, and an image processing method for performing a predetermined image process for digitized image data so as to obtain a special visual effect.

A special effect apparatus that performs a predetermined image process for an image signal and obtains a special visual effect is known. In recent years, such a special effect apparatus converts an image signal into a digital signal and thereby presents a variety of expressions.

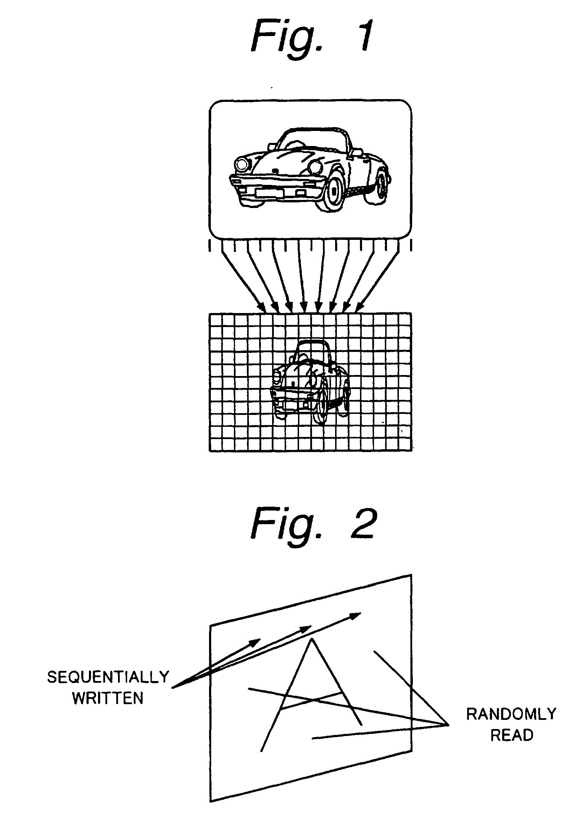

Examples of special effects obtained by such a special effect apparatus are a rotation effect, a reduction effect, and an explosion effect of an image. Among these examples, in the explosion effect, an image outwardly expands from the center. In such special effects, as shown in Fig. 1, image data of one field or one frame is written to a mapping memory. When the image data is read from the memory, desired memory addresses are generated. Corresponding to the generated addresses, image data is read from the mapping memory. Thus, the image is converted and a predetermined special effect is obtained.

When such a process is performed, image data that has been written to the memory is randomly read therefrom. In other words, as shown in Fig. 2, image data is sequentially written to the memory and randomly read therefrom. At this point, since image data should be processed on real time basis, it should be accessed at high speed. Thus, SRAMs (Static Random Access Memories) that are random-accessible high-speed memories have been used.

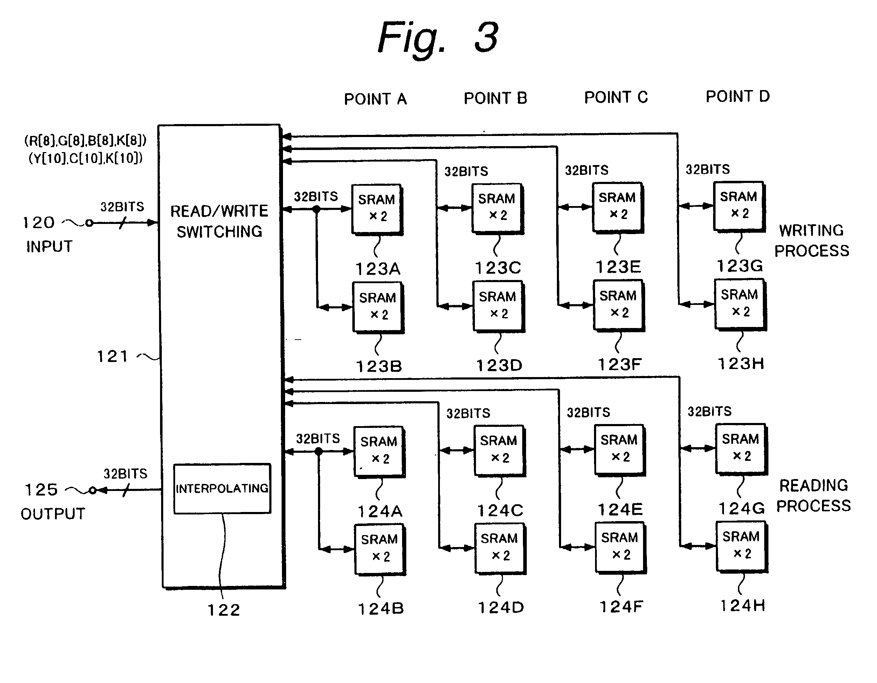

Fig. 3 shows an example of the structure of a conventional image converting circuits using SRAMs. When an image is converted (for example, an image is enlarged or reduced with a predetermined ratio), with data of four sampling points A, B, C, and D that surround a sampling point X that is converted, so-called bilinear interpolating method is used. Corresponding to the ratio between the sampling point X and each of the sampling points A, B, C, and D, the sampling points A, B, C, and D are weighted. Thus, when image data is converted, data of four sampling points is required at a time. Consequently, four sets of SRAMs corresponding to the sampling points A to D are required.

Data supplied from a terminal 120 is composed of a component signal having a luminance signal Y, a color signal C, and a key signal K each of which has a data width of 10 bits. Thus, the component signal has a data width of 30 bits or 32 bits. On the other hand, one word of each SRAM is 16 bits or 8 bits. When data of one sampling point with a data width of 32 bits is accessed from an SRAM with a data width of 16 bits, two SRAMs connected in parallel are required. In addition, since the storage capacity of each SRAM is as small as around 1 Mbits, another SRAM is required for addresses of conversion data. In addition, since data is written and read in parallel, two sets of SRAMs that are alternately switched are required.

In other words, in the conventional structure, as shown in Fig. 3, eight of SRAM sets 123A to 123H each of which is composed of two SRAMs are required for the writing process. Thus, a total of 16 SRAMs are required for the writing process. Likewise, eight SRAM sets 124A to 124H each of which is composed of two SRAMs are required for the reading process. Thus, a total of 16 SRAMs are required for the reading process. Consequently, in the conventional structure, a total of 32 SRAMs are required.

The SRAM sets 123A to 123H for the writing process and the SRAM sets 124A to 124H for the reading process are alternately switched by a read/write switching circuit 121. Thus, the reading process and the writing process can be performed in parallel.
Image data of four points A to D that are read is supplied to an interpolating circuit 122. The interpolating circuit 122 performs a predetermined interpolating process for the image data of the four points A to D and outputs the resultant data to a terminal 125.

When the storage capacity of one SRAM is the same as that of one DRAM (Dynamic RAM), the former is more expensive and has a larger power consumption than the latter.

Thus, so far, DRAMs should have been used for the above-described mapping memories. However, in DRAMs, when data is read, two addresses RAS and CAS should be designated. In addition, since DRAMs require a precharge time, they cannot be randomly accessed at high speed.

Thus, when DRAMs are used for the above-described application, a plurality of DRAMs are connected in parallel. In other words, since data is separately written to a plurality of DRAMs, the access speed of the DRAMs is apparently increased. However, when DRAMs are connected in parallel, the amount of data written to the individual DRAMs is decreased. Nowadays, since the storage capacities of DRAMs are being increased, the efficiency thereof deteriorates.

In addition, before the above-described special effect process is performed, a filtering process is performed for image data in the horizontal direction and vertical direction by a scan converter. When the filtering process is performed in the vertical direction, adjacent scanning lines are used. Thus, data is successively stored for each field or each frame in the horizontal direction and read in the vertical direction. Consequently, memories that can be randomly accessed at high speed are required.

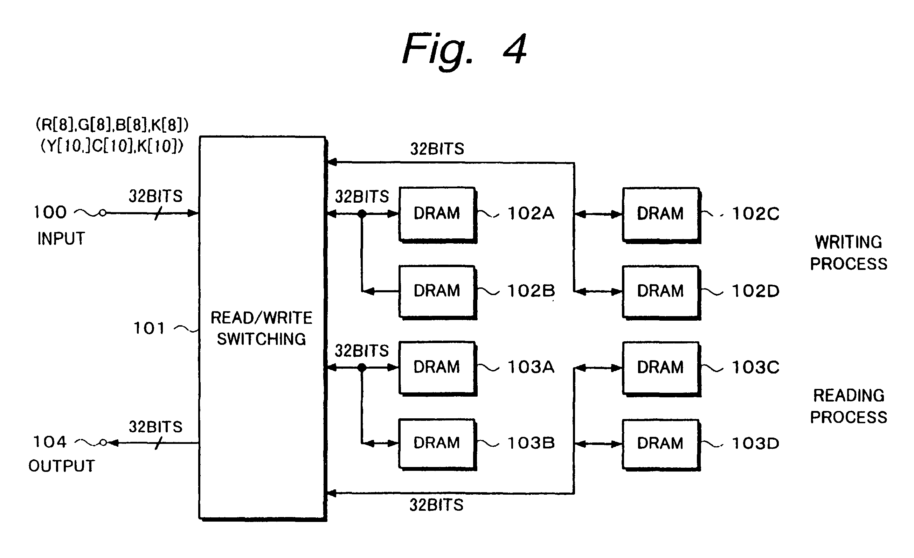

Fig. 4 shows an example of the structure of a conventional scan converter using DRAMs. The scan converter has a two-phase parallel structure. Data of a first field of image data that is input from a terminal 100 is written to two DRAMs 102A and 102B each of which has a data width of 16 bits. Likewise, data of a second field is written to two DRAMs 102C and 102D each of which has a data width of 16 bits.

Since the scan converter performs the writing process and reading process for image data in parallel, two sets of memories that are DRAMs 102A to 102D and DRAMs 103A to 103D are required. The two sets of memories are alternately switched by a read/write switching circuit 101. When data is read, the two-phase memories are alternately accessed and image data is successively read in the vertical direction. The resultant data is obtained from a terminal 104. Thus, eight DRAMs are required.

In other words, when the scan converter is composed of DRAMs, many DRAMs are required.

WO 97/39437 discloses a high speed video frame buffer using single port memory chips where pixel intensity values for display regions are stored at consecutive addresses of memory blocks. In some embodiments a memory with plural banks may be used, vertical stripes of pixels being stored in different banks.

US 5,384,912 discloses a real time video image processing system, which uses extensive filtering and inter-pixel interpolation. It uses a memory with plural banks and stores pixel data in several banks at one time to increase reading of pixel data speeds.

Therefore, an object of the present invention is to provide an image processing apparatus, a special effect apparatus, and an image processing method that allow relatively low-speed memories to be randomly accessed at high speed.

According to an aspect of the present invention, there is provided an image processing apparatus for reading and writing digital video data to and from a memory in a predetermined sequence so as to perform a converting process, the apparatus comprising: a memory having a plurality of banks; and address controlling means for controlling addresses of said memory in such a manner that a plurality of samples comprising a luminance signal, a colour signal and a key signal from one sampling point of the digital video data are during a single burst to successive addresses of one of the plurality of banks of said memory; and wherein when the digital video data is written to the plurality of banks, said address controlling means alternately switches the plurality of banks for each sampling point of the digital video data and for each line of the digital video data so as to control addresses of said memory in such a manner that samples of adjacent sampling points in both a horizontal and vertical direction are stored in different banks.

As described above, according to at least preferred embodiments of the present invention, a memory having a plurality of banks is used. In addition, a plurality of samples for example a luminance Y, a color C, and a key K of one sampling point of digital video data are written to successive address of one of a plurality of banks of the memory by an address controlling means of the memory. Thus, a plurality of samples of one sample point can be burst-written and burst-read.

In addition, according at least preferred embodiments of the present invention, a memory having a plurality of banks is used. In addition, a plurality of samples for example a luminance Y, a color C, and a key K of one sampling point of digital video data are written to successive addresses of one of a plurality of banks of the memory by an address controlling means of the memory. When the digital video data is written, the banks are alternately switched for each sampling point and for each line in such a manner that samples of adjacent sampling points are written to different banks. Thus, the digital video data can be read in the vertical direction at high speed with the banks alternately switched.

Moreover, according to at least preferred embodiments of the present invention, a memory having a plurality of banks is used. In addition, a plurality of samples for example a luminance Y, a color C, and a key K of one sampling point of digital video data are written to successive addresses of one of the plurality of banks of the memory. When the digital video data is written since data of one sampling point is written to the plurality of banks, even if any sampling point is selected, the digital video data can be read at high speed with the banks alternately switched.

Embodiments of the invention will now be described, by way of example only, with reference to the accompanying drawings in which:
Fig. 1 is a schematic diagram for explaining a converting process for a special effect;
Fig. 2 is a schematic diagram for explaining an access process of a memory for a special effect;
Fig. 3 is a block diagram showing an example of the structure of a picture converting circuit according to a prior art reference using SRAMs;
Fig. 4 is a block diagram showing an example of the structure of a conventional scan converter using DRAMs;
Fig. 5 is a block diagram showing an example of the structure of an image processing apparatus according to one embodiment the present invention;
Fig. 6 is a block diagram showing an example of the structure of a filter that performs a scan converting process;
Fig. 7 is a block diagram showing an example of the structure of a scan converter portion according to an embodiment of the present invention;
Fig. 8 is a time chart showing a process of a multiplexer;
Fig. 9 is a time chart showing an example of an accessing method of an SDRAM;
Fig. 10 is a schematic diagram showing a list of examples of restrictions of an SDRAM;
Fig. 11 is a schematic diagram showing the relation of sampling points and addresses of an SDRAM according to a first embodiment of the present invention;
Fig. 12 is a timing chart showing an example of a data reading process for an SDRAM;
Fig. 13A and 13B are schematic diagrams for explaining a bilinear interpolating process;
Fig. 14 is a block diagram showing an example of the structure of a memory according to a second embodiment of the present invention; and
Fig. 15 is schematic diagram showing the relation between sampling points and addresses of SDRAMs 55A to 55D according to the second embodiment of the present invention.

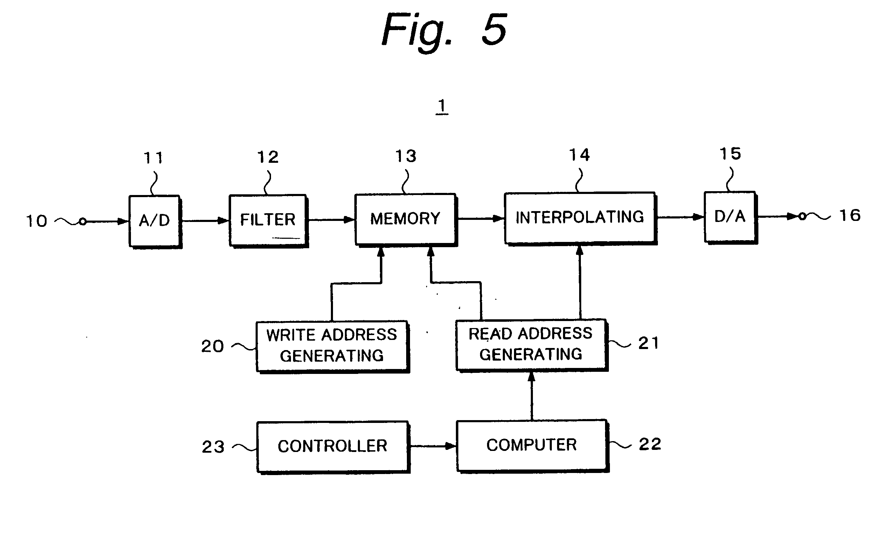

Next, with reference to the accompanying drawings, a first embodiment of the present invention will be described. Fig. 5 shows an example of the structure of an image processing apparatus 1 according to the present invention. In the image processing apparatus 1, an input analog video signal is converted into a digital signal. The digital signal is written to a memory. With a controller connected to for example a computer, read addresses of the memory are controlled so as to obtain various special effects such as an enlargement effect, a reduction effect, and an explosion effect of an image.

An analog video signal is input to a terminal 10. The video signal is composed of a component signal YCK having a luminance signal Y, a color signal C, and a key signal K. The key signal K represents whether or not the current pixel is valid.
Moreover, the video signal may be composed of a composite signal that is converted into a component signal.

The video signal is supplied from the terminal 10 to an A/D converter 11. The A/D converter 11 samples the video signal at a predetermined sampling frequency and thereby converts the video signal into a digital signal. The digital signal is supplied to a filter 12. The filter 12 filters the video signal in the horizontal and vertical directions. The filter 12 is a scan converter portion that filters the video signal in the horizontal direction and then reads the resultant video signal in the vertical direction.

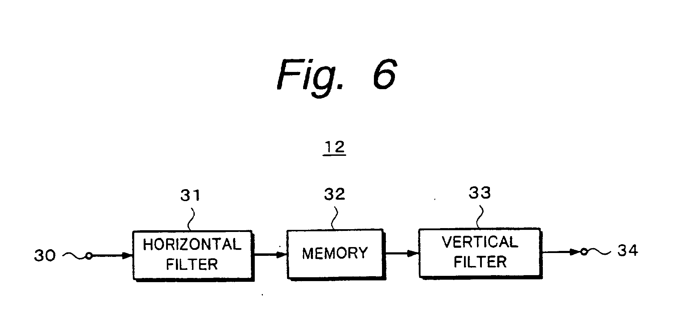

Fig. 6 shows an example of the structure of the filter 12 that performs the scan converting process. A video signal is input from a terminal 30. The input video signal is supplied to a horizontal filter 31. The horizontal filter 31 filters the video signal for each line. The resultant signal is written to a memory 32. Data is read from the memory 32 in the vertical direction. The resultant data is supplied to a vertical filter 33. The vertical filter 33 performs a filtering process in the vertical direction for the data that is read from the memory 32. Output data of the vertical filter 33 is obtained from a terminal 34.

The filter 12 filters the video signal in the horizontal and vertical directions and reduces aliasing in the quantizing process for the video signal. The resultant video signal is written to a memory 13.
Write addresses of video data written to the memory 13 are generated by a write address generating circuit 20. The memory 13 is a mapping memory for performing a special effect. When necessary, data written to the memory 13 is thinned out and read in a changed sequence.

Video data that is written to the memory 13 is read corresponding to read addresses generated by a read address generating circuit 21. Video data that is read from the memory 13 is supplied to an interpolating circuit 14. The interpolating circuit 14 interpolates the video data received from the memory 13. The resultant video data is supplied to a D/A converter 15. The D/A converter 15 converts the video data received from the interpolating circuit 14 into an analog video signal. The analog video signal is output from a terminal 16.

The read address generating circuit 21 generates read addresses of the memory 13 in a predetermined sequence corresponding to a command received from a computer 22. The computer 22 has a controller 23 that designates various special effects (an enlargement effect, a reduction effect, an explosion effect, and so forth) for an image. The computer 22 supplies a control signal to the read address generating circuit 21 corresponding to an operation of the controller 23. The read address generating circuit 21 generates read addresses of the memory 13 corresponding to the control signal for the designated effect.

The read address generating circuit 21 supplies to the interpolating circuit 14 a control signal corresponding to the read addresses supplied to the memory 13. Thus, the interpolating circuit 14 interpolates the video data that is read from the memory 13 corresponding to the designated effect.

The first embodiment of the present invention is applied to the scan converter portion (namely, the filter 12, in particular, the memory 32 of the filter 12) shown in Figs. 5 and 6. Fig. 7 shows an example of the structure of the scan converter portion according to the first embodiment of the present invention. The scan converter portion shown in Fig. 7 corresponds to the memory 32 shown in Fig. 6.

Video data is input from a terminal 40. As described above, the video data is composed of a component signal YCK having components Y, C, and K. In this example, 10 bits are assigned to each of samples of components Y, C, and K of the component signal. Thus, the data width of the input video data is 30 bits. As another example, the data width of the input video data is 32 bits including dummy data of two bits. As a further example, which is outside the scope of the invention when the input video signal is composed of a component signal having signals R, G, B, and K, eight bits are assigned to each of samples of components R, G, B, and K.

The input video data is supplied to a read/write switching circuit 41. The read/write switching circuit 41 has a multiplexer 42 and a demultiplexer 43. The multiplexer 42 rearranges 32-bit parallel video data to serial video data of individual components at a clock frequency four times higher than the input video data.

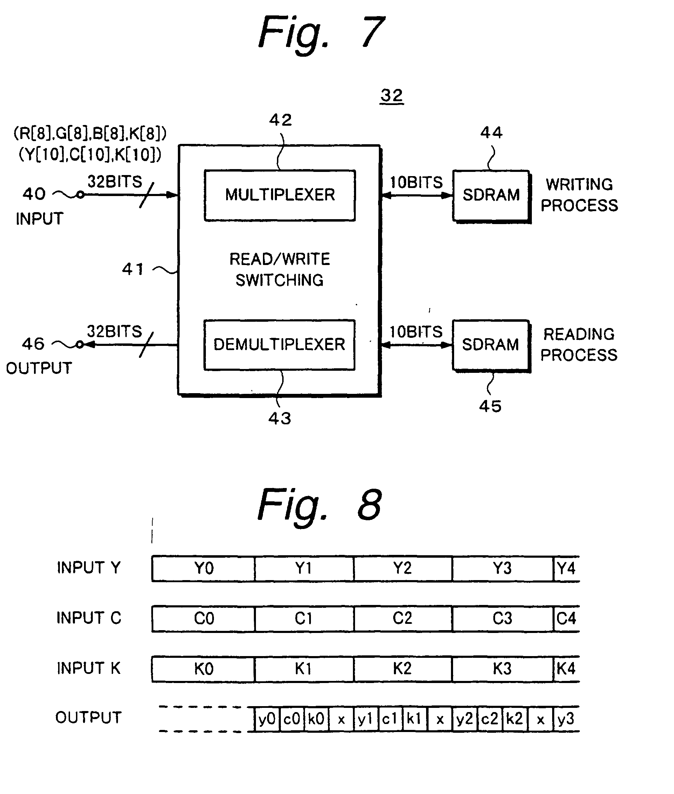

In other words, as shown in a time chart of Fig. 8, input data is parallel data of components Y, C, and K and has a data width of 30 bits (32 bits). At a clock frequency four times higher than the input data, the input data is compressed in the time axis direction. Components Y, C, and K of each sampling point of video data are arranged in series and output as data with a data width of 10 bits.

Data with a data width of 10 bits is written to an SDRAM 44. The read/write switching circuit 41 is connected to two SDRAMs that are SDRAMs 44 and 45. The read/write switching circuit 41 alternately switches the reading process and the writing process of the two SDRAMs 44 and 45 at predetermined timings so that while data is being written to one SDRAM, data is being read from the other SDRAM. In this example, for simplicity, it is assumed that while data is being written to the SDRAM 44, data is being read from the SDRAM 45.

Next, the accessing method for the SDRAMs 44 and 45 will be described. Addresses of the SDRAMs 44 and 45 are designated as a matrix of column addresses and row addresses. Each of the SDRAMs 44 and 45 has two memory areas that are banks A and B that are alternately switched. Row addresses are designated to each of banks A and B. Column addresses are designated to each of the row addresses. The data width of each of the SDRAMs 44 and 45 is 16 bits. The storage capacity of each of the SDRAMs 44 and 45 is around 16 Mbits.

A plurality of column addresses can be successively accessed in each of the SDRAMs 44 and 45 at a time so as to successively write or read data to/from the column addresses. In other words, a burst-reading process and a burst-writing processes can be performed. The number of words that can be successively written and read is referred to as burst length. The burst length can be freely set such as "1", "2", "4", "8", and "full page". In this example, the burst length is set to "4".

The SDRAMs 44 and 45 are controlled corresponding to commands. For example, each of the SDRAMs is controlled corresponding to a command that is a combination of signals that are input to a predetermined command input terminal and an address input terminal having a 12-bit parallel input portion. The command is generated by for example a memory controller (not shown) and supplied to the SDRAMs 44 and 45.

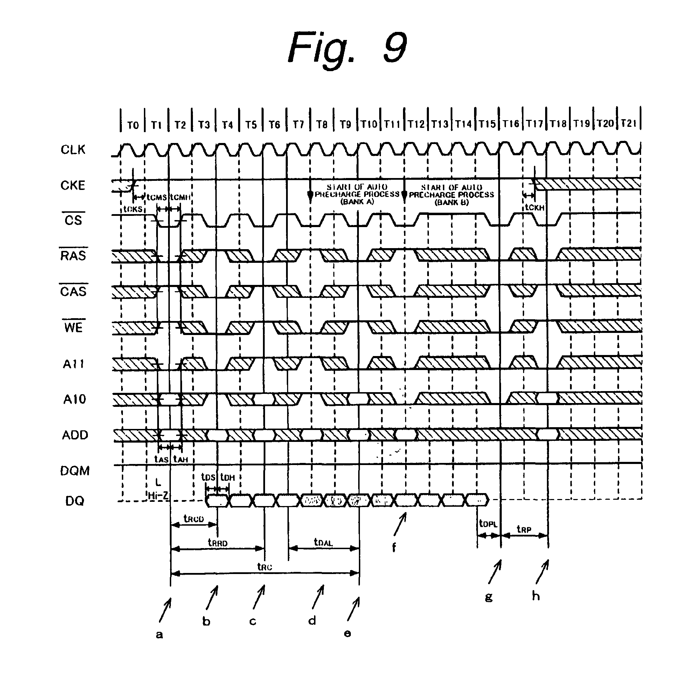

When the SDRAMs 44 and 45 are controlled with a command, there are several restrictions due to asynchronous characteristics of the SDRAMs 44 and 45 that are synchronous memories. When data is effectively written and read to/from the SDRAMs 44 and 45, the restrictions should be sufficiently considered. Next, the controlling process and the restrictions of the SDRAMs 44 and 45 will be described in brief. Fig. 9 is a timing chart showing an example of an accessing method of the SDRAMs 44 and 45.

When the SDRAMs 44 and 45 are used, a mode register is set. The operation modes of the SDRAMs 44 and 45 depend on the setting of the mode register. The mode register is set corresponding to a mode register set command. The mode register sets CAS latency, lap type, and burst length. After the mode register has been set, the next command cannot be input until a predetermined time period for example 20 ns elapses.

The CAS latency is the most important in these parameters. The CAS latency is used to set the latency after a command is input until data is read (namely, the number of clock pulses). In other words, when a command is input, data is read after a time period corresponding to the CAS latency elapses. The CAS latency is selected from for example "1", "2", or "3". In this example, the CAS latency is set to "2".

The lap type is used to designate an increment sequence of addresses of burst data in the burst-writing process and the burst-reading process. As the lap type, one of sequential and interleave can be selected. As the burst length, one of "1", "2", "4", "8", and "full page" is selected and set. In this example, the burst length is set to "4".

In the SDRAMs 44 and 45, an active command causes a particular row address of a particular bank to be active. Thus, the particular row address of the particular bank becomes write/read enable state. In the example shown in Fig. 5, the active command for bank A is output at time point a. Thus, bank A becomes write/read enable state. Likewise, at time points c, e, and h, an active command for bank A or bank B is I output. A data write/read command for a row address of the active bank is input. In addition, data is input. Thus, the data is written/read to/from the relevant row address of the relevant bank.

After data is written/read, a precharge process should be performed. Thus, in Fig. 9, at time point g, a precharge command for bank A is output. When the write/read command with the auto precharge option is executed, after the data is written/read, the precharge process can be automatically performed.

In the example shown in Fig. 9, at time point b, the write command with the auto precharge option is output for bank A. After data with burst length "4" is written to bank A, the command is executed. At time point f, the write command without the auto precharge option is output.

The interval of two write commands is the period of one clock pulse. Write commands can be input at intervals of one clock pulse without any restrictions. Likewise, the interval of two read commands is the period of one clock pulse. Read commands can be input at intervals of one clock pulse without any restrictions. However, when data is read, after a read command is input until data is output, the data is delayed for the CAS latency. In the example with the CAS latency = "2", after the read command is input, data is output with a delay of two clock pulses.

A write command and a read command can be interrupted with another write command or another read command, respectively. Thus, a column address to/from which data is written/read can be designated for each clock pulse.

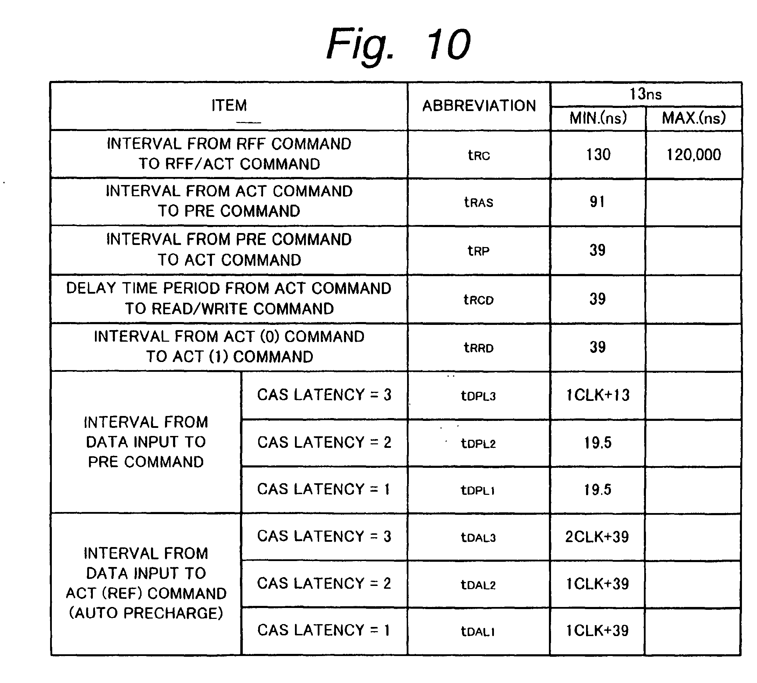

In the SDRAMs 44 and 45, as restrictions due to asynchronous characteristics, each command should be input and each operation should be performed with a predetermined interval. When the restrictions are violated, the SDRAMs 44 and 45 will malfunction. Fig. 10 is a table of examples of the restrictions. The numeric value on the first line of the table represents the minimum cycle of the operations of the SDRAMs 44 and 45. Next, with reference to Figs. 10 and 9, an example of which an SDRAM with a cycle of 13 ns is operated with a clock of 20 ns will be described.

The interval from one refresh command to the next refresh command or an active command is referred to as interval t_{RC} · The interval t_{RC} should be at least 130 ns the is equivalent to the period of seven clock pulses. The interval from an active command to a precharge command is referred to as interval t_{RAS}. The interval t_{RAS} should be at least 91 ns that is equivalent to the period of five clock pulses. In contrast, the interval from a precharge command to an active command is referred to as interval t_{RP}. The interval t_{RP} should be 39 ns that is equivalent to the period of two clock pulses. The interval from an active command to a data read/data write command is referred to as interval t_{RCD}. The interval t_{RCD} should be 39 ns that is equivalent to the period of two clock pulses.

The interval from an active command that activates one bank to an active command that activates another bank is referred to as interval t_{RRD}. The interval t_{RRD} should be 39 ns that is equivalent to the period of two clock pulses. In Fig. 9, the interval from time point a at which an active command for bank A is output to time point c at which an active command for bank B is output is the period of four clock pulses.

The interval from a data input to a precharge command is referred to as interval t_{DPL}. The interval from a last data input and the next active command in the case that data is written using a write command with the auto precharge option is referred to as interval t_{DAL}. The interval t_{DPL} and the interval t_{DAL} depend on the CAS latency. When the CAS latency is "3", the interval t_{DPL} should be the period of (one clock pulse + 13 ns) that is equivalent to the period of two clock pulses. When the CAS latency is "1" or "2", the interval t_{DPL} should be 19.5 ns that is equivalent to the period of one clock pulse. When the CAS latency is "3", the interval t_{DAL} should be the period of (2 clock pulses + 39 ns) that is equivalent to the period of four clock pulses. When the CAS latency is "1" or "2", the interval t_{DAL} should be the period of (1 clock pulse + 39 ns) that is equivalent to the period of three clock pulses.

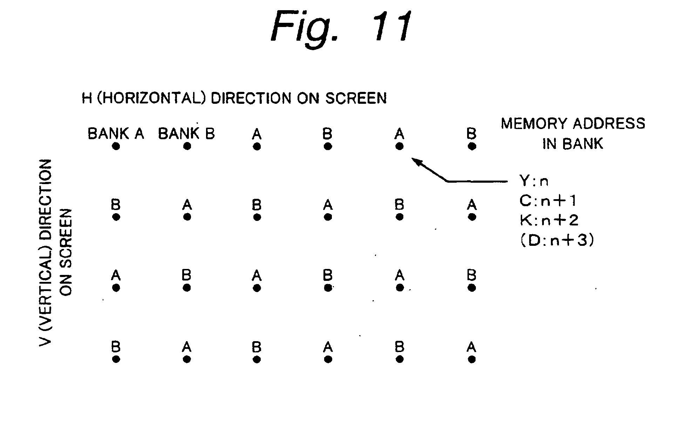

In the first embodiment, components Y, C, and K of one sample point that are divided and rearranged with a data width of 10 bits each by the multiplexer 42 are written to successive addresses of the same bank of the SDRAM 44 (45). Fig. 11 shows the relation between sampling points and addresses of the SDRAM 44 (45) according to the first embodiment of the present invention. Data is written in the horizontal direction of the screen. Data is read in the vertical direction of the screen. Data is written to bank A and bank B that are alternately switched for each sampling point in the horizontal direction. When data is read in the vertical direction, bank A and bank B are alternately switched. Addresses of the SDRAMs 44 and 45 are controlled corresponding to an address signal generated by an address signal generating circuit (not shown).

Components Y, C, and K of one sampling point are burst-written with one address assigned. As shown in Fig. 11, for example the write command with the auto precharge option designates address n to which data Y is written. Corresponding to the burst length (= "4"), after data Y is written to address n, data C, data K, and dummy data are written to successive addresses n+1, n+2, and n+3, respectively. The dummy data can be omitted.

After data has been written to bank A, an active command for bank B is output. Thus, the next pixel data is written to bank B. As with the writing process for bank A, data is burst-written to bank B. While data is being written to bank B, the precharge process is automatically performed for bank A using the write command with the auto precharge option. Thus, bank A and bank B are alternately switched and data of each component of one sampling point is written corresponding to the burst length.

When data is read from the SDRAM 45 (44), as with the writing process, bank A and bank B are alternately switched for each sampling point and data is burst-read therefrom. However, when data is read, addresses are designated in the vertical direction of the screen. Thus, data in the horizontal direction is read in the vertical direction.

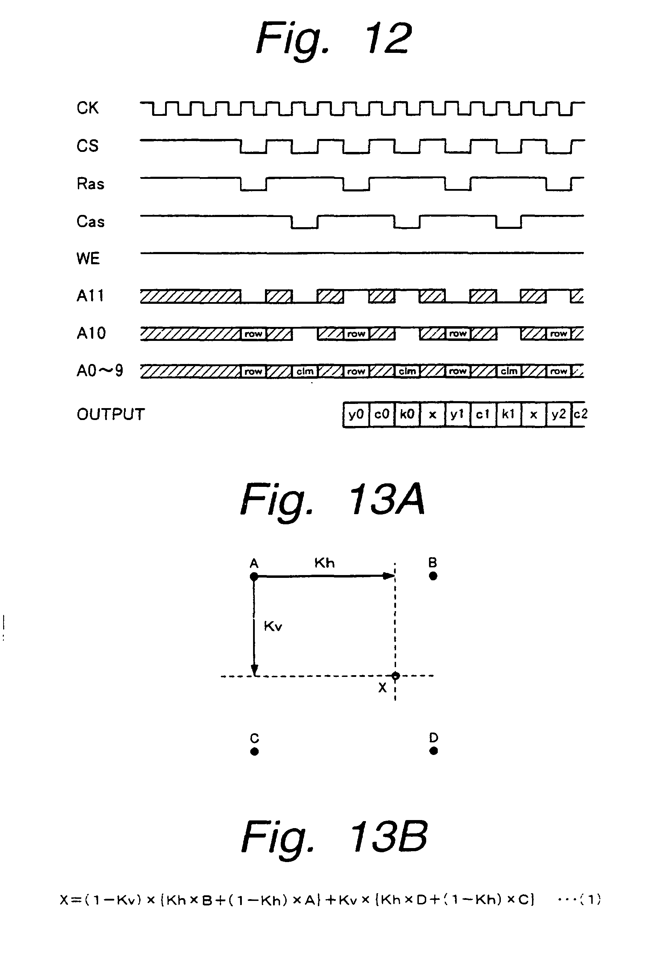

Fig. 12 is a timing chart showing an example of the data reading process for the SDRAM 45 (44) Signals Cₖ, Rₐₛ, and Cₐₛ are timing signals that are supplied from the outside. Signal WE is a write enable signal. Signals A11, A10, and A0 to A9 are address signals. Signal A11 is used to designate a bank. Signal A10 is used to designate an auto precharge process. Signals A0 to A9 are used to designate a row address and a column address.

Signals A0 to A9 are used to designate a row address and a column address of the top data (in this case, data of component Y) of one sampling point.
After the column address has been designated, with a delay of two clock pulses corresponding to the CAS latency (= "2"), data of component Y is read. Thereafter, data of other components of one sample point is burst-output corresponding to the burst length (= "4").

After the column address is designated and a time period of two clock pulses elapses, the other bank becomes active. Thereafter, a row address and a column address are designated. After a time period of two clock pulses elapses, data is burst-read. Thus, bank A and bank B are alternately switched and data is successively read therefrom.

Data with a data width of 10 bits is read from the SDRAM 45 and supplied to the demultiplexer 43 of the read/write switching circuit 41. The demultiplexer 43 performs an inverse process of the process of the above-described multiplexer 42. Data of components of Y, C, and K of one sampling point that are input in series is rearranged in parallel. Thus, digital video data of one sampling point with a data width of 32 bits is output.

In the SDRAMs 44 and 45, when the CAS latency is "2", the number of banks is two or more, and the burst length is at least "4", even if the two banks are alternately switched, data of any addresses of the SDRAM 44 or 45 can be burst-read and burst-written for the burst length at a time. Thus, in the first embodiment of the present invention, pixel data of SDRAMs is accessed at high speed.

In the prior art described with reference to Fig. 4, eight DRAMs are required. In comparison, according to the first embodiment of the present invention, only two SDRAMs are required. Thus, the structure can be very simplified. In addition, the cost of the apparatus can be reduced. This applies to the case that the number of banks increases and the burst length becomes long.

Next, a second embodiment of the present invention will be described. In the second embodiment of the present invention, the image conversion processing apparatus 1 uses SDRAMs as a memory 13 that performs a mapping process for obtaining a special effect.

For easy understanding of the second embodiment, with reference to Figs. 13A and 13B, a bilinear interpolating process for converting an image will be described. In Fig. 13A, points A, B, C, and D are unconverted sampling points as light points. Point X is a converted light point. It is assumed that the length of one side of a square formed of points A to D is 1, the horizontal distance from point A to point X is Kh (where 0 ≤ Kh ≤ 1), and the vertical distance from point A to point X is Kv (where 0 ≤ Kv ≤ 1).
Pixel data of points A to D is weighted corresponding to formula (1) shown in Fig. 13B so as to obtain pixel data of point X.

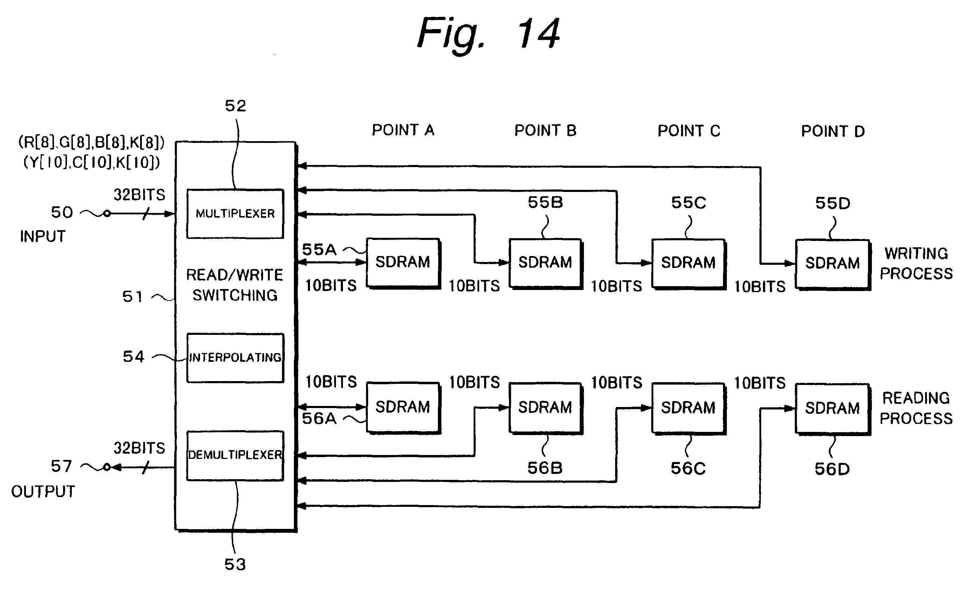

Fig. 14 shows an example of the structure of the memory 13 according to the second embodiment of the present invention. Video data as a component signal having components Y, C, and K is input from a terminal 50. In this example, 10 bits are assigned to each of components Y, C, and K of the component signal. Thus, data with a data width of 30 bits is input. Alternatively, video data with a data width of 30 bits including dummy data of 2 bits may be input.

Input video data is supplied to a read/write switching circuit 51. The read/write switching circuit 51 has a multiplexer 52 and a demultiplexer 53. The demultiplexer 53 performs an inverse process of the process of the multiplexer 52.

As with the first embodiment, in the second embodiment, the multiplexer 52 compresses video data composed of a component signal having components Y, C, and K in the time axis direction and rearranges the components in series. In other words, as described with reference to the time chart shown in Fig. 8, components Y, C, and K of one sampling point of the video signal are arranged in series and output as data with a data width of 10 bits.

The read/write switching circuit 51 is connected to two sets of SDRAMs 55A to 55D and SDRAMs 56A to 56D. The read/write switching circuit 51 alternately switches the reading process and the writing processes of the two sets of SDRAMs 55A to 55D and SDRAMs 56A to 56D at predetermined timings in such a manner that while data is being written to one set, data is read from the other set. In this example, it is assumed that data is written to the set of SDRAMs 55A to 55D and data is read from the set of SDRAMs 56A to 56D.

Although not shown, address signals are supplied from the write address generating circuit 20 and the read address generating circuit 21 to the read/write switching circuit 51. The address signals are supplied to relevant ones of the SDRAMs 55A to 55D and SDRAMs 56A to 56D through the read/write switching circuit 51.

As described above, since the SDRAMs 55A to 55D and SDRAMs 56A to 56D have a sufficient storage capacity of around 16 Mbits each, they can store addresses necessary for the image converting process. Thus, it is not necessary to provide extra address memories. The accessing method for the SDRAMs 55A to 55D and SDRAMs 56A to 56D of the second embodiment is the same as that for the SDRAMs 44 and 45 of the first embodiment.

Data with a data width of 10 bits is supplied from the multiplexer 52 to the SDRAMs 55A, 55B, 55C, and 55D corresponding to points A, B, C, and D used for the bilinear interpolating process, respectively. Data corresponding to point A is written to the SDRAM 55A. Data corresponding to point B is written to the SDRAM 55B. Data corresponding to point C is written to the SDRAM 55C. Data corresponding to point D is written to the SDRAM 55D.

Corresponding to a special effect designating command issued by for example the computer 22, particular pixel data with a data width of 10 bits is read from the SDRAMs 56A to 56D. The data that is read from the SDRAMs 56A to 56D is supplied to an interpolating circuit 54. The interpolating circuit 54 performs a particular interpolating process for the data. The demultiplexer 53 performs an inverser process of the process of the multiplexer 52. In other words, the demultiplexer 53 converts components Y, C, and K of one sampling point that are input in series with a data width of 10 bits each into video data of one sampling point with a data width of 32 bits. Output data of the demultiplexer 53 is obtained from a terminal 57.

The SDRAMs 55A to 55D (56A to 56D) correspond to four sampling points used for the bilinear interpolating process. Thus, data can be written to each of the four SDRAMs in a time period four times longer than that of the writing process of data of one sampling point. Consequently, in the second embodiment, data of one sampling point is written to both banks A and B of writing side SDRAMs.

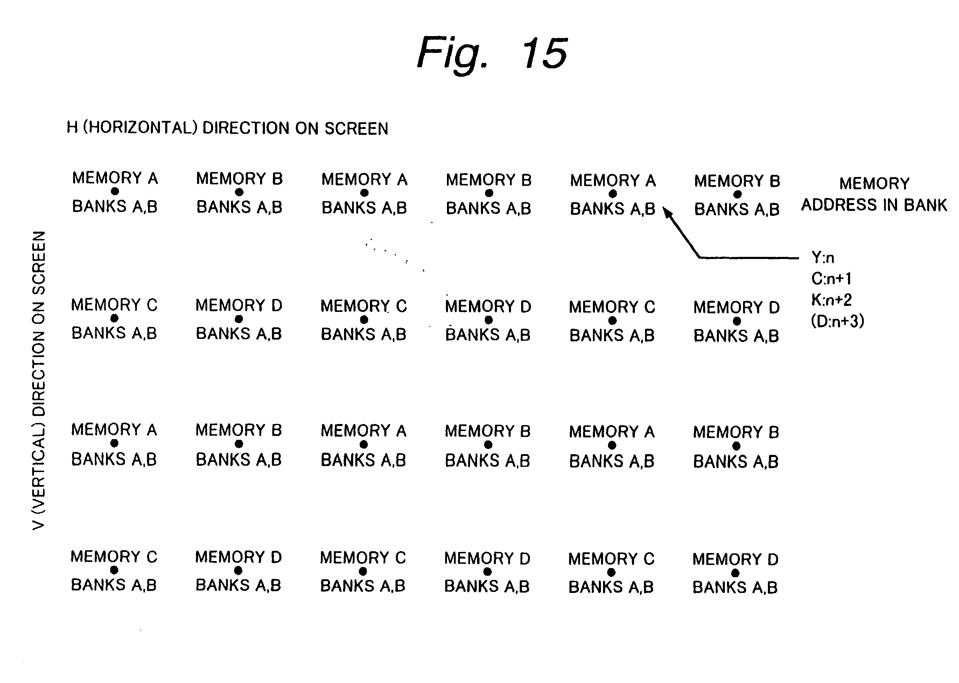

Fig. 15 shows the relation between sampling points and addresses of the SDRAMs 55A to 55D (56A to 56D) according to the second embodiment of the present invention. Memories A, B, C, and D correspond to the SDRAMs 55A, 55B, 55C, and 55D (or SDRAMs 56A, 56B, 56C, and 56D), respectively. For example, on an odd line, data of each sampling point is alternately written to memories A and B. On an even line, data of each sampling point is alternately written to memories C and D. As described above, data is written to both banks A and B.

At this point, each of components Y, C, and K of one sampling point is assigned to one address and burst-written. As shown in Fig. 15, when address n for data Y is assigned by a write command with the auto precharge option, corresponding to the burst length (= "4"), components Y, C, K, and dummy data are written to successive addresses n, n+1, n+2, and n+3, respectively. In this case, the dummy data can be omitted.

When pixel data is written to four memories A to D, even if data of any adjacent four pixels is required, since banks A and B can be alternately switched, data can be successively read. Thus, an image can be converted by the bilinear interpolating process at high speed.

In the above-described prior art reference shown in Fig. 3, 32 SRAMs are required. In contrast, in the second embodiment, only eight SDRAMs are required. Thus, according to the second embodiment, the structure can be very simplified and the cost can be reduced. The second embodiment can be applied to the case that the number of banks and the burst length increase.

As described above, according to the image processing apparatus and the special effect apparatus, video data with a data width of 32 bits supplied in parallel is rearranged in series by the multiplexer. Thus, the data width of video data can be decreased corresponding to the data width of each SDRAM. In addition, since data can be burst-read and burst-written from/to SDRAMs, data can be effectively accessed. Consequently, even if data should be randomly accessed at high speed, the memory space of each SDRAM can be effectively used. As a result, a desired process can be performed without need to use a large number of SRAMs.

According to the first embodiment of the present invention, the scan converter portion can be composed of two SDRAMs instead of eight DRAMs unlike with the structure of the prior art reference. According to the second embodiment, the image converting portion can be composed of only eight SDRAMs instead of 32 SDRAMs unlike with the structure of the prior art reference.

The cost and outer shape of an SRAM with a storage capacity of 1 Mbits are the same as those of an SRAM with a storage capacity of 16 Mbits. In reality, to drive memories, many address buffers and data buffers are required. Thus, according to the second embodiment, the size of the image converting portion can be 1/7 times smaller than the structure of the prior art reference using SRAMs. Consequently, according to the present invention using SDRAMs, the cost and size can be remarkably reduced in comparison with those of the structure of the prior art reference.

In addition, according to at least preferred embodiments of the present invention, the number of pins and drive capacity of a peripheral interface IC (Integrated Circuit) for activating the memory can be reduced. Thus, the cost and size of the apparatus can be reduced.

Having described specific preferred embodiments of the present invention with reference to the accompanying drawings, it is to be understood that the invention is not limited to those precise embodiments, and that various changes and modifications may be effected therein by one skilled in the art without departing from the scope of the invention as defined in the appended claims.

## Claims

1. An image processing apparatus for reading and writing digital video data to and from a memory in a predetermined sequence so as to perform a converting process, the apparatus comprising:
a memory having a plurality of banks; and
address controlling means for controlling addresses of said memory in such a manner that a plurality of samples comprising a luminance signal, a colour signal and a key signal from one sampling point of the digital video data are written during a single burst to successive addresses of one of the plurality of banks of said memory; and
wherein when the digital video data is written to the plurality of banks, said address controlling means alternately switches the plurality of banks for each sampling point of the digital video data and for each line of the digital video data so as to control addresses of said memory in such a manner that samples of adjacent sampling points in both a horizontal and vertical direction are stored in different banks.

2. The image processing apparatus as set forth in claim 1,
wherein when the digital video data is written to said memory, said address controlling means controls the addresses of said memory in such a manner that samples of one sampling point are written to at least two of the plurality of banks.

3. The image processing apparatus as set forth in claim 1, wherein reading said digital video data from said memory in a predetermined sequence obtains a special image effect.

4. The image processing apparatus as set forth in claim 2, wherein reading said digital video data from said memory in a predetermined sequence obtains a special image effect.

## Patentansprüche

1. Bildverarbeitungsvorrichtung zum Lesen und Schreiben digitaler Videodaten von einem und in einen Speicher in einer vorbestimmten Folge, um einen Umsetzungsprozess auszuführen, wobei die Vorrichtung aufweist:
einen Speicher, der mehrere Bänke aufweist, und
eine Adressensteuerungseinrichtung zur Steuerung von Adressen des Speichers derart, dass mehrere Abtastungen, die ein Lumianzsignal, ein Farbsignal und ein Schlüsselsignal eines einzelnen Abtastpunkts der digitalen Videodaten aufweisen, während eines einzelnen Bursts zu sukzessiven Adressen einer der mehreren Bänke des Speichers geschrieben werden, und
wobei beim Schreiben der digitalen Videodaten in die mehreren Bänke die Adressensteuerungseinrichtung die mehreren Bänke für jeden Abtastpunkt der digitalen Videodaten und für jede Zeile der digitalen Videodaten abwechselnd schaltet, um Adressen des Speichers derart zu steuern, dass Abtastungen benachbarter Abtastpunkte in sowohl einer horizontalen als auch vertikalen Richtung in unterschiedlichen Bänken gespeichert werden.

2. Bildverarbeitungsvorrichtung nach Anspruch 1,
wobei beim Schreiben der digitalen Videodaten in den Speicher die Adressensteuerungseinrichtung die Adressen des Speichers derart steuert, dass Abtastungen eines einzelnen Abtastpunkts in wenigstens zwei der mehreren Bänke geschrieben werden.

3. Bildverarbeitungsgerät nach Anspruch 1, wobei ein Lesen der digitalen Videodaten aus dem Speicher in einer vorbestimmten Folge einen Spezialbildeffekt erreicht.

4. Bildverarbeitungsvorrichtung nach Anspruch 2, wobei ein Lesen der digitalen Videodaten aus dem Speicher in einer vorbestimmten Folge einen Spezialbildeffekt erreicht.

## Revendications

1. Dispositif de traitement d'image destiné à lire des données vidéo numériques à partir d'une mémoire et à en écrire sur celle-ci dans une séquence prédéterminée de façon à exécuter un procédé de conversion, le dispositif comprenant :
une mémoire comportant une pluralité de batteries, et
un moyen de commande d'adresse destiné à commander des adresses de ladite mémoire de telle manière qu'une pluralité d'échantillons comprenant un signal de luminance, un signal de couleur et un signal clé provenant d'un point d'échantillonnage des données vidéo numériques soient écrits durant une seule salve à des adresses successives d'une batterie parmi la pluralité des batteries de ladite mémoire, et
où, lorsque les données vidéo numériques sont écrites sur la pluralité de batteries, ledit moyen de commande d'adresse commute en alternance la pluralité de batteries pour chaque point d'échantillonnage des données vidéo numériques et pour chaque ligne des données vidéo numériques de façon à commander les adresses de ladite mémoire de telle manière que les échantillons de points d'échantillonnage adjacents dans les deux directions horizontale et verticale soient mémorisés dans différentes batteries.

2. Dispositif de traitement d'image selon la revendication 1,
dans lequel lorsque les données vidéo numériques sont écrites sur ladite mémoire, ledit moyen de commande d'adresse commande les adresses de ladite mémoire de telle manière que les échantillons d'un point d'échantillonnage sont écrits sur au moins deux batteries de la pluralité de batteries.

3. Dispositif de traitement d'image selon la revendication 1, dans lequel la lecture desdites données vidéo numériques à partir de ladite mémoire dans une séquence prédéterminée obtient un effet d'image spécial.

4. Dispositif de traitement d'image selon la revendication 2, dans lequel la lecture desdites données vidéo numériques à partir de ladite mémoire dans une séquence prédéterminée obtient un effet d'image spécial.
